# EUROPEAN PATENT SPECIFICATION

(11) **EP 2 148 459 B1**
(45) Date of publication and mention of the grant of the patent: **16.05.2012**
(21) Application number: 08748590.0
(22) Date of filing: 16.05.2008
(51) Int. Cl.: H04Q 11/00, H04J 3/06

(54) **A METHOD FOR ESTABLISHING CLOCK TRACE RELATIONSHIP AND A SYSTEM FOR COMPUTING CLOCK TRACE RELATIONSHIP**
VERFAHREN ZUR HERSTELLUNG EINES TAKTSPURVERHÄLTNISSES UND SYSTEM ZUR BERECHNUNG EINES TAKTSPURVERHÄLTNISSES
PROCÉDÉ SERVANT À ÉTABLIR UN RAPPORT DE TRACE D'HORLOGE ET SYSTÈME SERVANT À CALCULER UN RAPPORT DE TRACE D'HORLOGE

(30) Priority: 17.05.2007 CN 200710107043
(43) Date of publication of application: 27.01.2010
(73) Proprietor: Huawei Technologies Co., Ltd., Longgang District, Shenzhen Guangdong 518129 (CN)
(72) Inventor: SHI, Xinghua, Shenzhen Guangdong 518129 (CN); ZHAO, Min, Shenzhen Guangdong 518129 (CN); FENG, Junjie, Shenzhen Guangdong 518129 (CN); WANG, Yu, Shenzhen Guangdong 518129 (CN)
(74) Representative: Isarpatent
(86) International application number: PCT/CN2008/070984
(87) International publication number: WO 2008/141574

(56) References cited:
- EP-B1- 0 242 117
- WO-A1-2006/067002
- WO-A2-98/35466
- CN-A- 1 421 075
- CN-A- 1 617 509
- CN-A- 1 770 701
- CN-A- 1 770 701
- KR-A- 20010 087 705
- US-A- 5 475 717
- US-B1- 6 711 411

## Description

### Field of the Invention

The present invention relates to communication technologies, and in particular, to a method for establishing clock tracing relations and an apparatus for computing clock tracing relations.

### Background of the Invention

In a communication network, the clock is vital to the quality of network services. If the clock of a network is abnormal, service data pointer justification occurs, or even worse, the whole network breaks down.

Generally, the network uses one or more external clock sources to provide a clock reference for each node. Each network node traces an external clock source according to the tracing relation planned in a specific way, and switches the tracing relation when the network status changes. The clock tracing relation needs to fulfill one important principle: The clock tracing relation cannot be looped anytime. If the tracing relation is looped, for example, node A traces B, and B traces A, the network service deteriorates and fails shortly.

In a traditional communication network such as a traditional optical transport network, the network topology is relatively simple, namely, is mainly a chain or a ring, and the quantity of link dimensions of each node is generally 2; therefore, the tracing and switching relation is easy to plan and implement. When the clock signal on the link at one side of a node deteriorates, the clock signal on the link at the other side is traced; when the clock signals on the links at both sides are unavailable, the clock is held. Manual planning is commonly used in preventing looping of the tracing relation.

Networks are more and more complex. For example, in an Automatically Switched Optical Network (ASON) where a control plane is introduced, a network node generally has multiple dimensions, and the topological relation between nodes is complex and changes constantly. Therefore, manual planning is generally not effective in ensuring correctness of the clock tracing and switching relation of the network node.

EP 1811713A1 discloses a method for determining a clock-tracing path in a network, which include: determining, by a distributed network elements or a centralized server, a shortest path to each of clock-source network elements according to network topology information, link weight information and clock-source network, element information; determining, by the distributed network element or the centralized server in the network, an optimal one among the clock-source network elements; taking, by the distributed network element or the centralized server in the network, the determined shortest path to the optimal clock-source network element as a clock-tracing path of the distributed network element; and using the clock-tracing path for clock tracing.

US 6711411 B1 discloses a synchronization network that includes a number of nodes and reference clock distribution logic includes, at each of the nodes, storing a table that represents a most recent status of the synchronization network. Reference clocks are then distributed to each node in the synchronization network. If a change in synchronization status occurs at a node in the synchronization network, this change is detected. The table at the node is updated to represent an updated status of the synchronization network. Then, a synchronization network management protocol is used to distribute the updated status to other nodes in the synchronization network. Other nodes may change their status in response to receipt of the updated information, and information about these additional updates are distributed throughout the synchronization network in a similar manner, thereby facilitating control of the synchronization network.

### Summary of the Invention

A method for establishing a clock tracing relation and an apparatus for computing a clock tracing relation are provided in embodiments of the present invention to ensure correctness of the clock tracing and switching relation of a network node.

A method for establishing a clock tracing relation is provided in an embodiment of the present invention. The method includes:
computing, by a clock source access node, a Shortest Path Tree (SPT) from the clock source access node to other nodes in a network;
selecting, by the clock source access node, nodes governed by the clock source access node according to the SPT and source information corresponding to the SPT; and
establishing clock tracing relations from the clock source access node to the governed nodes consecutively along the SPT;
wherein the establishing of the clock tracing relation consecutively from the clock source access node to the governed nodes comprises:
sending, by the clock source access node, a PATH message that carries a specific ID hop by hop along the SPT until the message arrives at a branch end node among the governed nodes; and
tracing, by each node which the PATH message passes through and arrives at, a clock of an ingress link of the PATH message according to the specific ID.

A system comprises an apparatus for computing a clock tracing relation set on a clock source access node in a network, said apparatus including:
a path computing unit, adapted to compute an SPT from a clock source access node to all other nodes;
a source selecting unit, adapted to select nodes governed by the clock source access node according to the SPT and clock source information corresponding to the SPT; and
a tracing triggering unit, adapted to establish a clock tracing relation from the clock source access node to the governed nodes consecutively along the SPT, send a PATH message that carries a specific ID hop by hop along the SPT until the message arrives at a branch end node among the governed nodes,
the system further comprises each node which the PATH message passes through and arrives at, the each node adapted to trace a clock of an ingress link of the PATH message according to the specific ID.

A computer-readable storage medium is provided in an embodiment of the present invention.

A computer-readable storage medium includes computer program codes which are executed by a clock source access node and trigger the clock source access node to perform the following steps:
computing an SPT from a clock source access node to all other nodes in a network;
selecting nodes governed by the clock source access node according to the SPT and source information corresponding to the SPT; and
establishing clock tracing relations from the clock source access node to the governed nodes consecutively along the SPT;
wherein the establishing of the clock tracing relation consecutively from the clock source access node to the governed nodes comprises:
sending, by the clock source access node, a PATH message that carries a specific ID hop by hop along the SPT until the message arrives at a branch end node among the governed nodes;
the computer-readable storage medium, further comprising computer program codes which are executed by each node which the PATH message passes through and arrives at, and trigger the each node to perform the following steps:
tracing, by the each node, a clock of an ingress link of the PATH message according to the specific ID.

In the embodiments of the present invention, the SPT from a root to all other nodes is computed by using the clock source access node as the root; the node governed by each clock source access node is determined according to the SPT where the node resides; and a tracing path is established from the root to each end node consecutively. The source tracing relation of each node is governed and established by each relatively centralized clock source access node, without requiring mutual coordination between nodes. Therefore, the method is compatible with the centralized control of the network, and is extensible. The tracing relation is determined consecutively in the tree path so that the tracing relation is prevented from being looped and that the tracing path is optimized. Moreover, a computer-readable storage medium is provided. The computer-readable storage medium includes computer program codes which are executed by a clock source access node or another set node to ensure correctness of the clock tracing and switching relation of the network nodes.

### Brief Description of the Drawings

FIG. 1 is a flowchart of a method for establishing a clock tracing relation according to a first embodiment of the present invention;
FIG. 2 shows a structure of an exemplary network according to the first embodiment of the present invention;
FIG. 3 shows an SPT of an exemplary network according to the first embodiment of the present invention;
FIG. 4 shows another SPT of an exemplary network according to the first embodiment of the present invention;
FIG. 5 shows a clock tracing relation of an exemplary network according to the first embodiment of the present invention;
FIG. 6 is a flowchart of a method for establishing a clock tracing relation in an ASON according to a second embodiment of the present invention;
FIG. 7 shows the establishing of a clock tracing relation according to the second embodiment of the present invention;
FIG. 8 shows a logical structure of an apparatus for computing a clock tracing relation according to a third embodiment of the present invention; and
FIG. 9 shows a logical structure of an apparatus for computing a clock tracing relation according to a fourth embodiment of the present invention.

### Detailed Description of the Embodiments

A method for establishing a clock tracing relation according to an embodiment of the present invention includes: computing an SPT from a root to all other nodes by using the clock source access node as the root; determining the node governed by each clock source access node according to the SPT where the node resides; and establishing a tracing path from the root to each end node consecutively. Corresponding to the method, an apparatus for computing a clock tracing relation is provided in an embodiment of the present invention, as detailed below.

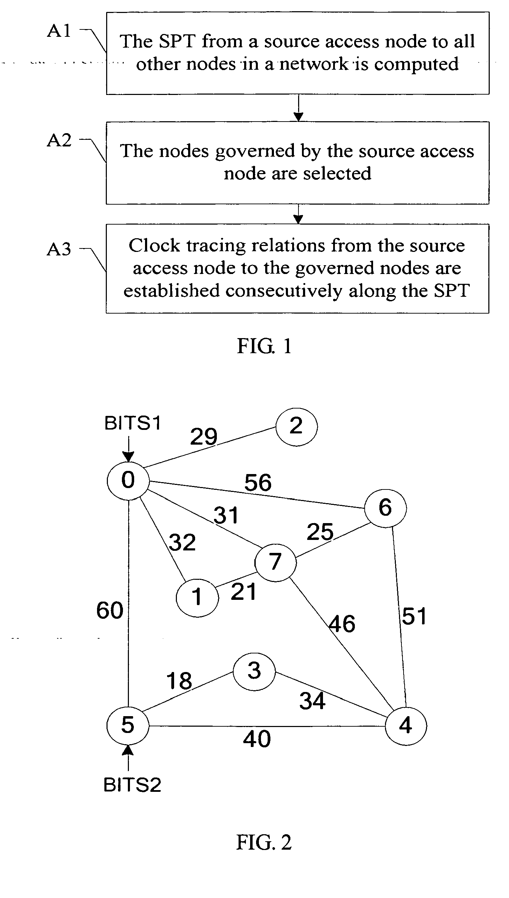

Embodiment 1: A method for establishing a clock tracing relation is provided. As shown in FIG. 1, the method includes the following steps:
A1. An SPT from a clock source access node to all other nodes in a network is computed.

In this embodiment, the computation of the SPT may be a fully centralized computation. That is, the computation is undertaken by an independent network device. For example, a computation server connected to the network is responsible for computing the SPT. This independent network device responsible for computation may be regarded as a set computation node. The computation node obtains the network topology information and the clock source information to compute the SPT and select the governed node, and delivers the path information of the governed node to the corresponding clock source access node. The computation may also be partially centralized computation. That is, each clock source access node is responsible for computation. The clock source access node obtains the network topology information and the source information to compute the SPT and select the governed node. Specially, if the network has only one clock source, the computation may still be regarded as fully centralized computation.

In the process of computing the SPT, the access node of each external clock source serves as a root node, and the SPT from the root node to all other nodes in the network is computed out. Therefore, the number of SPTs computed out is equal to the number of external clock sources in the network. The computation method may be a Shortest Path First (SPF) algorithm. The purpose of the algorithm is to obtain the shortest path from the clock source access node to all other nodes according to a certain rule, and any algorithm that fulfills that purpose is selectable. The selection of the algorithm depends on the actual application requirements. The SPT is described below through an example.

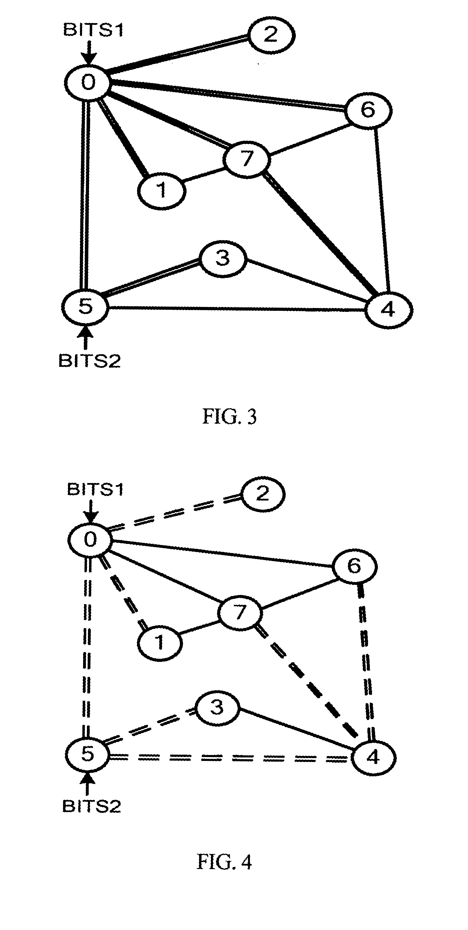

As shown in FIG. 2, it is assumed that a network includes eight nodes (nodes 0-7), and uses two Building Integrated Timing Systems (BITSs) as external clock sources, namely, BITS 1 and BITS2; node 0 is the access node of BITS 1, and node 5 is the access node of BITS2. The topological relation between the nodes is illustrated by the lines in FIG. 2. The numerals on the lines represent the path distance, and higher values of the numerals mean longer distances. The SPTs rooted at node 0 and node 5 are shown in FIG. 3 and FIG. 4. The double solid line in FIG. 3 denotes the SPT path of node 0, and the double dotted line in FIG. 4 denotes the SPT path of node 5. Generally, the path with fewest hops is preferred as the shortest path. If two paths have the same quantity of hops, the path with the shortest distance is preferred. The specific rules for determining the shortest path are configured according to the actual requirements.

The nodes responsible for computation (which include set computation nodes, and each clock source access node, etc., the same below) may compute the SPT by obtaining the network topology information. The network topology information may be flooded to the node responsible for computation through a routing protocol such as the Open Shortest Path First (OSPF) protocol.

A2. The nodes governed by the clock source access node are selected according to the computed SPT and the source information corresponding to the SPT.

This step determines the source to be traced by each node. When several nodes in the network trace a source, it means that the clock source access node connected to the source "governs" the nodes. The nodes governed by the clock source access node are determined in the following way:
1. If a node belongs to only one SPT, it indicates that the node can be connected to only one clock source, and therefore, it is determined that the clock source access node corresponding to the SPT governs the node;
2. If a node belongs to multiple SPTs, it indicates that the node can be connected to multiple sources, and can trace any of the sources. To optimize the tracing relation and ensure that all the clock source access nodes obtain the same governing scope result in the case of partially centralized computation, a preset selection rule may be applied to determine a clock source access node for governing the node that belongs to multiple SPTs. The following selection rules are applicable:
   A. the clock source access node connected to the clock source of the highest clock quality level is selected;
   B. if the clock quality level is the same, the clock source access node connected to the clock source of the highest priority is selected;
   C. if both the clock quality level and the priority are the same, the clock source access node with the shortest path to the node is selected; and
   D. if the clock quality level, the priority, and the path to the node are all the same, the clock source access nodes are further distinguished through some rules that lead to a unique selection result, for example, the clock source access node with the minimum serial number may be selected.

Exceptionally, if a node in the network is not in any STP computed out, it means that the node is separated and disconnected from all clock sources in the network topology. Therefore, this node is not "governed" by any clock source access node.

After the governing relation of the node is determined, the clock tracing relation of the node can be determined according to the clock source connected to the clock clock source access node that governs the node as well as the path of the node in the SPT corresponding to the clock source access node. If the fully centralized computation mode is applied, a set computation node needs to deliver the computed clock tracing relation to all the clock source access nodes, with a view to establishing the clock tracing relation subsequently. The computation node may deliver the clock tracing relations of the nodes throughout the network to each access node uniformly, and the access node selects the governed part. Alternatively, the computation node delivers only the part governed by each access node to each access node pertinently.

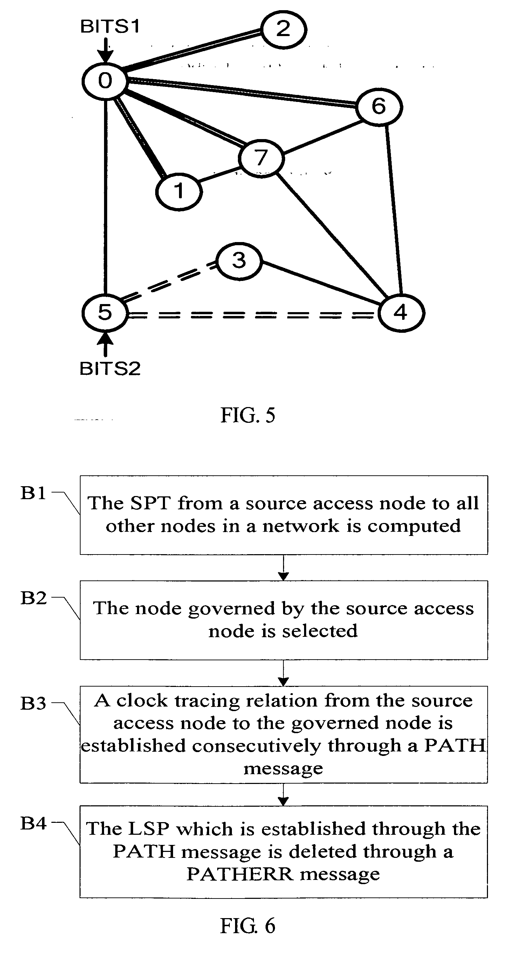

Still taking the network in FIG. 2 as an example, the determining of the clock tracing relation of the node is described below. Supposing BITS 1 and BITS2 in FIG. 2 have the same quality level and priority, the clock source access node that governs each node is determined according to the shortest path of the node in the SPT. Comparison between FIG. 3 and FIG. 4 shows that: node 5 governs node 3 and node 4; node 0 governs nodes 1, 2, 6, and 7. The clock tracing relation of the node is shown in FIG. 5. In FIG. 5, the double solid line denotes the tracing path of the node governed by node 0, and the double dotted line denotes the tracing path of the node governed by node 5.

The foregoing rule for selecting the governing relation of the clock source access node shows that: In the process of determining the governing relation of the node, the node responsible for computation may need to draw upon the relevant source information, including quality level and priority information. Such information may also be flooded by the clock source access node to the whole network.

Step A 1 and step A2 reveal that: Regardless of fully centralized computation or partially centralized computation, both of which are based on the same information and the same computation mode and selection rule, the clock tracing relation (including the node governing relation and the corresponding tracing path) obtained by each clock source access node is consistent rather than contradictory, and requires no mutual coordination, thus fulfilling the time requirements of the clock tracing relation switching.

A3. clock tracing relations from the clock source access node to the governed nodes are established consecutively along the SPT.

The clock source access node may establish the clock tracing relation by sending signaling to the nodes governed by the clock source access node. The signaling is transmitted along the SPT path rooted at this access node. Each node establishes the clock tracing relation to the previous node consecutively, thus preventing looping of the tracing relation.

The foregoing process of establishing the clock tracing relation is performed when the system enters the normal running state after startup and initialization. The network topology information for establishing the clock tracing relation reflects the actual state of the current network, and is dynamic and real-time; and the clock source information for establishing the clock tracing relation also varies with the state of the clock source. Once such information is updated, the current clock tracing relation may be damaged or non-optimal.

Possible factors that lead to update of the network topology information include the following:
1. The link is broken or deteriorated;
2. The link recovers from break or deterioration; and
3. The clock source access node is restarted.

Possible factors that lead to update of the clock source information include the following:
1. The quality level or priority of the clock source changes;
2. The clock source is damaged or recovered; and
3. Break or recovery occurs as a result of clock source resetting.

Therefore, to ensure effectiveness of the clock tracing relation when the update of the network topology information and the clock source information is issued to the node responsible for computation, re-computation of the clock tracing relation may need to be triggered. In this case, two policies are applicable:
Policy 1: The clock tracing relation is re-computed so long as the network topology information or the clock source information is updated.
Policy 2: When the network topology information or clock source information is updated, a judgment is made about whether the updated information exerts an impact on the current clock tracing relation. If the impact is exerted, the impact retriggers computation of the SPT and selection of the node governed by the clock source access node. For example, in the clock tracing relation shown in FIG. 5, if the link between node 3 and node 4 is broken, it is judged that the tracing relation is not impacted and the re-computation needs not to be triggered; if the link between node 0 and node 7 is broken, it is judged that the tracing relation is impacted and the re-computation needs to be triggered.

Specially, to avoid frequent update caused by transient link jitters, a delay may be set against the jitters. Only the network update information that survives the delay is regarded as valid update information.

Nevertheless, re-computation of the clock tracing relation does not necessarily mean clock switching. The clock may be switched only if the re-computation result changes. In this case, it is practicable to trigger update of only the clock tracing relation of the changed part, or trigger update for all the nodes governed by a clock source access node, or trigger update for the whole network.

Taking a specific network such as ASON as an example, the following embodiment provides a method on the basis of the first embodiment.

Embodiment 2: A method for establishing a clock tracing relation in an ASON is provided. This embodiment differs from the first embodiment in that: The tracing relation is established through signaling based on the Multi-Protocol Label Switching/Generalized Multi-Protocol Label Switching (MPLS/GMPLS) protocol applied in the ASON. As shown in FIG. 6, the method includes the following steps:
B1. The SPT from a clock source access node to all other nodes in a network is computed.
B2. Nodes governed by each clock source access node are selected according to the computed SPT and the clock source information corresponding to the SPT.

The foregoing two steps are similar to step A1 and step A2 in the first embodiment, and are not described further.
B3. Clock tracing relations from the clock source access node to the governed nodes are established consecutively through a PATH message. More specifically:

The clock source access node sends a PATH message carrying a specific ID hop by hop along the SPT until the message arrives at the destination node, namely, the branch end node in the governed nodes. The specific ID indicates that the sent PATH message is a special PATH message for establishing a clock tracing relation. The form of the ID is not limited in the present invention.

The PATH message passes through and arrives at different nodes, and such nodes determine that the message is a PATH message for establishing a clock tracing relation according to the specific ID, and trace the clock of the ingress link of the PATH message. The PATH message is transferred from the root to each end node of the SPT, and each node governed by the clock source access node establishes a tracing relation to the clock source connected to the clock source access node.

A basic fact is: All nodes on the SPT path from the clock source access node to the branch end node governed by the clock source access node are governed by the access node. Therefore, although a clock source access node may govern multiple nodes, the PATH message needs to be sent only to the governed branch end node along the SPT path, thus shortening the signaling process. The foregoing process of establishing a tracing relation is exemplified below in more detail.

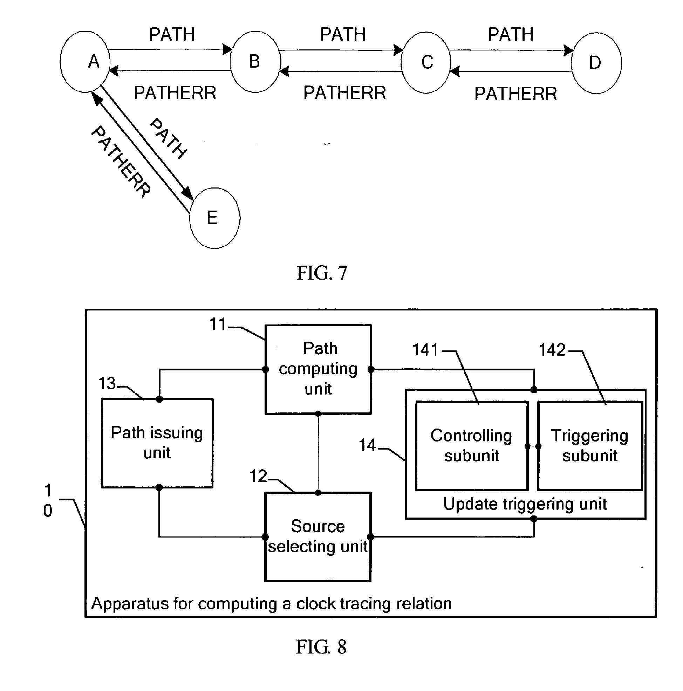

As shown in FIG. 7, it is assumed that the clock source access node A governs four nodes: B, C, D, and E, where node D and node E are branch end nodes. Therefore, the PATH signaling process of establishing a clock tracing relation initiated from node A may take either of these paths: A→B→C→D and A→E.

The foregoing process of establishing a clock tracing relation by using a PATH message is similar to a process of establishing a Label Switching Path (LSP) of a service. For example, in FIG. 7, two clock tracing LSPs are obtained after the PATH signaling has traveled the two established paths. Such LSP information is stored in the signaling layer, thus leading to a waste of resources. Therefore, preferably, the following step is added to release resources:
B4. The LSP which is established through the PATH message is deleted through a path information deletion (PATHERR) message. More specifically:

After receiving the PATH message, the branch end node sends the PATHERR message hop by hop until the PATHERR message arrives at the destination node, namely, the clock source access node that sends the PATH message.

The PATHERR message passes through and arrives at different nodes, and such nodes delete the information about the LSP which is established through the PATH message. In FIG. 7, the arrowhead opposite to the direction of transmitting the PATH message shows the foregoing process. In this way, after the clock tracing relation is established, the signaling layer does not need to store any "clock LSP" information.

It is understandable that the software for executing the method for establishing a clock tracing relation may be stored in a computer-readable medium. When being executed, the software performs these steps: computing an SPT from a clock source access node to all other nodes in a network; selecting a node governed by the clock source access node according to the SPT and the source information corresponding to the SPT; and establishing the clock tracing relation consecutively from the clock source access node to the governed node along the SPT, or delivering the computed shortest path and the path information of the node governed by the clock source access node to the corresponding clock source access node. The computer-readable medium may be a Read-Only Memory/Random Access Memory (ROM/RAM), a magnetic disk, a compact disk, and so on.

The apparatus for computing a clock tracing relation according to an embodiment of the present invention is detailed below.

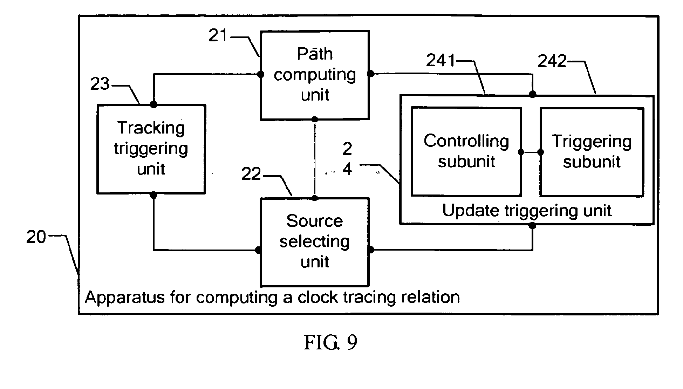

Embodiment 3: An apparatus 20 for computing a clock tracing relation is based on the partially centralized computation mode provided in the first embodiment of the present invention, and is deployed on each clock source access node in the network. As shown in FIG. 9, the apparatus includes:
a path computing unit 21, adapted to compute an SPT from a clock source access node to all other nodes;
a source selecting unit 22, adapted to select nodes governed by each clock source access node according to the SPT computed out by the path computing unit 21 and the source information corresponding to the SPT; and
a tracing triggering unit 23, adapted to establish clock tracing relations from the clock source access node to the governed nodes consecutively along the SPT rooted at the node of the tracing triggering unit. The tracing triggering unit 23 establishes the clock tracing relations by sending signaling to the governed nodes. For example, in an ASON, the branch end node among the governed nodes serves as a destination node, and the clock tracing relation is established by sending a PATH message that carries a specific ID. For details, the second embodiment serves as a reference.

To update the computed clock tracing relation according to the real-time change of the information required for computation, the apparatus 20 in this embodiment further includes an update triggering unit 24. The update triggering unit 24 may be:
a controlling subunit 241, adapted to: judge whether the updated network topology information and/or source information exerts an impact on the current clock tracing relations after receiving the updated network topology information and/or source information; or
a triggering subunit 242, adapted to: retrigger the path computing unit to compute the SPT and retrigger the source selecting unit to select the nodes governed by the clock source access node when the judgment result of the controlling subunit 241 is positive.

A computer-readable storage medium is provided in an embodiment of the present invention and includes computer program codes which are executed by a clock source access node and trigger the clock source access node to perform the following steps:
computing an SPT from a clock source access node to all other nodes in a network;
selecting nodes governed by the clock source access node according to the SPT and the source information corresponding to the SPT; and
establishing clock tracing relations from the clock source access node to the governed node consecutively along the SPT.

To sum up, in the embodiments of the present invention, the SPT from a root to all other nodes is computed by using the clock source access node as the root; each node governed by each clock source access node is determined according to the SPT where the node resides; and a tracing path is established from the root to each end node consecutively. The source tracing relation of each node is governed and established by each relatively centralized clock source access node, without requiring mutual coordination between nodes. Therefore, the method is compatible with the centralized control of the network, and is extensible. The tracing relation is determined consecutively in the tree path so that the tracing relation is prevented from being looped and that the tracing path is optimized. Besides, each clock source corresponds to an SPT and is based on certain selection rules. Therefore, multiple sources of the same quality can work simultaneously. In the method for establishing a clock tracing relation in an ASON, the tracing relation is established through signaling. Therefore, the time requirements are fulfilled in the case of switching the tracing relation; and no new reliable protocol needs to be developed and little change is made to the existing network because the signaling process itself ensures fulfillment of the transmission reliability requirements.

A method for establishing a clock tracing relation and a system for computing a clock tracing relation in embodiments of the present invention are detailed above. Although the invention is described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for establishing clock tracing relations, comprising:
Computing, by a clock source access node, a Shortest Path Tree, SPT, from the clock source access node to all other nodes in a network;
selecting, by the clock source access node, nodes governed by the clock source access node according to the SPT and source information corresponding to the SPT; and
establishing clock tracing relations from the clock source access node to the governed nodes consecutively along the SPT;
wherein the establishing of the clock tracing relation consecutively from the clock source access node to the governed nodes comprises:
sending, by the clock source access node, a PATH message that carries a specific ID hop by hop along the SPT until the message arrives at a branch end node among the governed nodes; and
tracing, by each node which the PATH message passes through and arrives at, a clock of an ingress link of the PATH message according to the specific ID.

2. The method of claim 1, wherein:
the clock source access node obtains network topology information and the clock source information to compute the SPT and select the governed nodes.

3. The method of claim 2, further comprising:
by the clock source access node, retriggering computation of the SPT and selection of the governed nodes after receiving updated network topology information and/or clock source information, and triggering establishing of a new clock tracing relation for at least a changed part when the computed or selected result changes.

4. The method of claim 1, wherein the nodes governed by the clock source access node is selected in the following way:
if a node belongs to only one SPT, the clock source access node corresponding to the SPT governs the node; or
if a node belongs to multiple SPTs, one of the clock source access nodes corresponding to the multiple SPTs is selected for governing the node according to preset rules.

5. The method of claim 4, wherein the preset rules comprise:
selecting the clock source access node connected to a source of a highest clock quality level;
if the clock quality level is the same, selecting the clock source access node connected to a source of highest priority; and
if both the clock quality level and the priority are the same, selecting the clock source access node with a shortest path to the node.

6. The method of claim 1, further comprising:
sending, by the branch end node after receiving the PATH message, a path information deletion message, PATHERR, hop by hop until the PATHERR message arrives at the clock source access node that sends the PATH message; and
deleting, by each node which the PATHERR message passes through and arrives at, path record information for the PATH message.

7. A system comprising an apparatus for computing clock tracing relations, the apparatus deployed on a clock source access node in a network, the apparatus comprising:
a path computing unit, adapted to compute a Shortest Path Tree, SPT, from a clock source access node to all other nodes;
a source selecting unit, adapted to select nodes governed by the clock source access node according to the SPT and clock source information corresponding to the SPT; and
a tracing triggering unit, adapted to establish clock tracing relations from the clock source access node to the governed nodes consecutively along the SPT, send a PATH message that carries a specific ID hop by hop along the SPT until the message arrives at a branch end node among the governed nodes;
said system further comprising each node which the PATH message passes through and arrives at, said each node adapted to trace a clock of an ingress link of the PATH message according to the specific ID.

8. The system of claim 7, wherein the apparatus further comprising:
an update triggering unit, adapted to retrigger the path computing unit to compute the SPT and retrigger the source selecting unit to select the governed nodes after receiving updated network topology information and/or clock source information.

9. The system of claim 8, wherein the update triggering unit comprises:
a controlling subunit, adapted to: judge whether the updated network topology information and/or clock source information exerts an impact on the clock tracing relation after receiving the updated network topology information and/or clock source information; and
a triggering subunit, adapted to retrigger the path computing unit to compute the SPT and retrigger the source selecting unit to select the governed nodes when a judgment result of the controlling subunit is positive.

10. A computer-readable storage medium, comprising computer program codes which are executed by a clock source access node and trigger the clock source access node to perform the following steps:
computing, by a clock source access node, a Shortest Path Tree, SPT, from the clock source access node to all other nodes in a network;
selecting, by the clock source access node, nodes governed by the clock source access node according to the SPT and source information corresponding to the SPT; and
establishing clock tracing relations from the clock source access node to the governed nodes consecutively along the SPT;
wherein the establishing of the clock tracing relation consecutively from the clock source access node to the governed nodes comprises:
sending, by the clock source access node, a PATH message that carries a specific ID hop by hop along the SPT until the message arrives at a branch end node among the governed nodes;
said computer-readable storage medium, further comprising computer program codes which are executed by each node which the PATH message passes through and arrives at, and trigger the each node to perform the following steps:
tracing, by the each node, a clock of an ingress link of the PATH message according to the specific ID.

## Patentansprüche

1. Verfahren zum Aufstellen von Taktverfolgungsbeziehungen, das Folgendes umfasst:
Berechnen eines Baums des kürzesten Wegs SPT von dem Taktquellenzugangsknoten zu allen anderen Knoten in einem Netz durch einen Taktquellenzugangsknoten;
Auswählen von Knoten, die durch den Taktquellenzugangsknoten verwaltet werden,
durch den Taktquellenzugangsknoten, gemäß dem SPT und Quelleninformationen in Übereinstimmung mit dem SPT; und
Aufstellen von Taktverfolgungsbeziehungen nacheinander von dem Taktquellenzugangsknoten zu den verwalteten Knoten längs des SPT;
wobei das Aufstellen der Taktverfolgungsbeziehungen nacheinander von dem Taktquellenzugangsknoten zu den verwalteten Knoten Folgendes umfasst:
Senden einer PATH-Nachricht, die eine spezifische Kennung enthält, durch den Taktquellenzugangsknoten schrittweise längs des SPT, bis die Nachricht an einem Verzweigungsendeknoten von den verwalteten Knoten eintrifft; und
Verfolgen eines Taktes einer Eingangsverbindung der PATH-Nachricht gemäß der spezifischen Kennung durch jeden Knoten, der von der PATH-Nachricht durchlaufen wird und an dem sie eintrifft.

2. Verfahren nach Anspruch 1, wobei:
der Taktquellenzugangsknoten Netztopologie-Informationen und die Taktquellen-Informationen erhält, um den SPT zu berechnen und die verwalteten Knoten auszuwählen.

3. Verfahren nach Anspruch 2, das ferner Folgendes umfasst:
Neuauslösen der Berechnung des SPT und der Auswahl der verwalteten Knoten nach dem Erhalt aktualisierter Netztopologie-Informationen und/oder Taktquellen-Informationen und Auslösen der Aufstellung einer neuen Taktverfolgungsbeziehung für wenigstens einen veränderten Abschnitt, wenn sich das berechnete oder gewählte Ergebnis ändert, durch den Taktquellenzugangsknoten.

4. Verfahren nach Anspruch 1, wobei die Knoten, die durch den Taktquellenzugangsknoten verwaltet werden, in der folgenden Weise ausgewählt werden:
dann, wenn ein Knoten lediglich zu einem SPT gehört, verwaltet der Taktquellenzugangsknoten, der dem SPT entspricht, den Knoten; oder
dann, wenn ein Knoten zu mehreren SPTs gehört, wird einer der den mehreren SPTs entsprechenden Taktquellenzugangsknoten zum Verwalten des Knotens gemäß im Voraus eingestellter Regeln ausgewählt.

5. Verfahren nach Anspruch 4, wobei die im Voraus eingestellten Regeln Folgendes umfassen:
Auswählen des Taktquellenzugangsknotens, der mit einer Quelle mit einem höchsten Taktqualitätspegel verbunden ist;
dann, wenn der Taktqualitätspegel gleich ist, Auswählen des Taktquellenzugangsknotens, der mit einer Quelle mit höchster Priorität verbunden ist; und
dann, wenn sowohl der Taktqualitätspegel als auch die Priorität gleich sind, Auswählen des Taktquellenzugangsknotens mit einem kürzesten Weg zu dem Knoten.

6. Verfahren nach Anspruch 1, das ferner Folgendes umfasst:
Senden einer Weginformations-Löschnachricht PATHERR schrittweise, bis die PATHERR-Nachricht an dem Taktquellenzugangsknoten eintrifft, der die PATH-Nachricht sendet, durch den Verzweigungsendeknoten nach dem Empfangen der PATH-Nachricht; und
Löschen von Wegaufzeichnungsinformationen für die PATH-Nachricht durch jeden Knoten, der von der PATHERR-Nachricht durchlaufen wird und an dem sie eintrifft.

7. System, das eine Vorrichtung zum Berechnen von Taktverfolgungsbeziehungen umfasst, wobei die Vorrichtung an einem Taktquellenzugangsknoten in einem Netz verwendet wird, wobei die Vorrichtung Folgendes umfasst:
eine Wegberechnungseinheit, die ausgelegt ist, einen Baum des kürzesten Wegs SPT von einem Taktquellenzugangsknoten zu allen anderen Knoten zu berechnen;
eine Quellenauswahleinheit, die ausgelegt ist, Knoten, die durch den Taktquellenzugangsknoten verwaltet werden, gemäß dem SPT und Taktquelleninformationen in Übereinstimmung mit dem SPT auszuwählen; und
eine Verfolgungsauslöseeinheit, die ausgelegt ist, Taktverfolgungsbeziehungen nacheinander von dem Taktquellenzugangsknoten zu den verwalteten Knoten längs des SPT aufzustellen und eine PATH-Nachricht, die eine spezifische Kennung enthält, schrittweise längs des SPT zu senden, bis die Nachricht an einem Verzweigungsendeknoten von den verwalteten Knoten eintrifft;
wobei das System ferner jeden Knoten umfasst, der von der PATH-Nachricht durchlaufen wird und an dem sie eintrifft, wobei jeder Knoten ausgelegt ist, einen Takt einer Eingangsverbindung der PATH-Nachricht gemäß der spezifischen Kennung zu verfolgen.

8. System nach Anspruch 7, wobei die Vorrichtung ferner Folgendes umfasst:
eine Aktualisierungsauslöseeinheit, die ausgelegt ist, die Wegberechnungseinheit neu auszulösen, um den SPT zu berechnen, und die Quellenauswahleinheit neu auszulösen, um die verwalteten Knoten auszuwählen, nachdem aktualisierte Netztopologie-Informationen und/oder Taktquellen-Informationen empfangen wurden.

9. System nach Anspruch 8, wobei die Aktualisierungsauslöseeinheit Folgendes umfasst:
eine Steuerungs-Untereinheit, die ausgelegt ist, zu entscheiden, ob die aktualisierten Netztopologie-Informationen und/oder Taktquellen-Informationen einen Einfluss auf die Taktverfolgungsbeziehung ausüben, nachdem die aktualisierten Netztopologie-Informationen und/oder Taktquellen-Informationen empfangen wurden; und
eine Auslöse-Untereinheit, die ausgelegt ist, die Wegberechnungseinheit neu auszulösen, um den SPT zu berechnen, und die Quellenauswahleinheit neu auszulösen, um die verwalteten Knoten auszuwählen, wenn ein Entscheidungsergebnis der Steuerungs-Untereinheit positiv ist.

10. Computerlesbares Speichermedium, das Computerprogrammcodes umfasst, die durch einen Taktquellenzugangsknoten ausgeführt werden und an dem Taktquellenzugangsknoten veranlassen, dass die folgenden Schritte ausgeführt werden:
Berechnen eines Baums des kürzesten Wegs SPT von dem Taktquellenzugangsknoten zu allen anderen Knoten in einem Netz durch einen Taktquellenzugangsknoten;
Wählen von Knoten, die durch den Taktquellenzugangsknoten verwaltet werden, gemäß des SPT und Quelleninformationen in Übereinstimmung mit dem SPT durch den Taktquellenzugangsknoten; und
Aufstellen von Taktverfolgungsbeziehungen nacheinander von dem Taktquellenzugangsknoten zu den verwalteten Knoten längs des SPT;
wobei das Aufstellen der Taktverfolgungsbeziehung nacheinander von dem Taktquellenzugangsknoten zu den verwalteten Knoten Folgendes umfasst:
Senden einer PATH-Nachricht, die eine spezifische Kennung enthält, durch den Taktquellenzugangsknoten schrittweise längs des SPT, bis die Nachricht an einem Verzweigungsendeknoten von den verwalteten Knoten eintrifft;
wobei das computerlesbare Speichermedium ferner Computerprogrammcodes umfasst, die durch jeden Knoten, den die PATH-Nachricht durchläuft und an dem sie eintrifft, ausgeführt werden und an jedem Knoten veranlassen, dass die folgenden Schritte ausgeführt werden:
Verfolgen eines Taktes einer Eingangsverbindung der PATH-Nachricht gemäß der spezifischen Kennung durch jeden Knoten.

## Revendications

1. Procédé d'établissement de relations de suivi d'horloge, comprenant :
le calcul, par un noeud d'accès de source d'horloge, de l'Arborescence de Chemin la plus Courte, SPT, depuis le noeud d'accès de source d'horloge jusqu'à tous les autres noeuds dans un réseau ;
la sélection, par le noeud d'accès de source d'horloge, de noeuds régis par le noeud d'accès de source d'horloge en fonction de la SPT et d'informations de source correspondant à la SPT ; et
l'établissement de relations de suivi d'horloge depuis le noeud d'accès de source d'horloge jusqu'aux noeuds régis consécutivement le long de la SPT ;
dans lequel l'établissement des relations de suivi d'horloge consécutivement depuis le noeud d'accès de source d'horloge jusqu'aux noeuds régis comprend :
l'envoi, par le noeud d'accès de source d'horloge, d'un message PATH qui porte une ID spécifique d'un bond à l'autre de la SPT jusqu'à ce que le message arrive à un noeud final de branchement parmi les noeuds régis ; et
le suivi, par chaque noeud par lequel le message PATH passe et auquel il arrive, d'une horloge d'une liaison entrante du message PATH selon l'ID spécifique.

2. Procédé selon la revendication 1, dans lequel :
le noeud d'accès de source d'horloge obtient des informations de topologie de réseau et les informations de source d'horloge pour calculer la SPT et sélectionner les noeuds régis.

3. Procédé selon la revendication 2, comprenant en outre :
par le noeud d'accès de source d'horloge, le redéclenchement du calcul de la SPT et de la sélection des noeuds régis après avoir reçu des informations de topologie de réseau et/ou informations de source d'horloge actualisées, et le déclenchement de l'établissement d'une nouvelle relation de suivi d'horloge pour au moins une partie changée quand le résultat calculé ou sélectionné change.

4. Procédé selon la revendication 1, dans lequel les noeuds régis par le noeud d'accès de source d'horloge sont sélectionnés de la façon suivante :
si un noeud appartient à une seule SPT, le noeud d'accès de source d'horloge correspondant à la SPT régit le noeud ; ou
si un noeud appartient à de multiples SPT, l'un des noeuds d'accès de source d'horloge correspondant aux multiples SPT est sélectionné pour régir le noeud en fonction de règles préétablies.

5. Procédé selon la revendication 4, dans lequel les règles préétablies comprennent :
la sélection du noeud d'accès de source d'horloge connecté à la source du plus haut niveau de qualité d'horloge ;
pour un même niveau de qualité d'horloge, la sélection du noeud d'accès de source d'horloge connecté à la source de la plus haute priorité ; et
pour des mêmes niveau de qualité d'horloge et priorité, la sélection du noeud d'accès de source d'horloge ayant le plus court chemin jusqu'au noeud.

6. Procédé selon la revendication 1, comprenant en outre :
l'envoi, par le noeud final de branchement après la réception du message PATH, d'un message de suppression d'informations de chemin, PATHERR, bond par bond ce que le message PATHERR arrive au noeud d'accès de source d'horloge qui envoie le message PATH; et
la suppression, par chaque noeud par lequel le message PATHERR passe et auquel il arrive, des informations d'enregistrement de chemin du message PATH.

7. Système comprenant un appareil pour calculer des relations de suivi d'horloge, l'appareil étant déployé sur un noeud d'accès de source d'horloge dans un réseau et comprenant :
une unité de calcul de chemin, adaptée pour calculer l'Arborescence de Chemin la plus courte, SPT, depuis un noeud d'accès de source d'horloge jusqu'à tous les autres noeuds ;
une unité de sélection de source, adaptée pour sélectionner des noeuds régis par le noeud d'accès de source d'horloge en fonction de la SPT et des informations de source d'horloge correspondant à la SPT ; et
une unité de déclenchement de suivi, adaptée pour établir des relations de suivi d'horloge depuis le noeud d'accès de source d'horloge jusqu'aux noeuds régis consécutivement le long de la SPT, envoyer un message PATH qui porte une ID spécifique bond d'un bond à l'autre de la SPT jusqu'à ce que le message arrive à un noeud final de branchement parmi les noeuds régis ;
ledit système comprenant chaque noeud par lequel le message PATH passe et auquel il arrive, chaque dit noeud étant adapté pour suivre une horloge d'une liaison entrante du message PATH selon l'ID spécifique.

8. Système selon la revendication 7, dans lequel l'appareil comprend en outre :
une unité de déclenchement d'actualisation, adaptée pour redéclencher l'unité de calcul de chemin afin de calculer la SPT et redéclencher l'unité de sélection de source afin de sélectionner les noeuds régis après avoir reçu des informations de topologie de réseau et/ou informations de source d'horloge actualisées.

9. Système selon la revendication 8, dans lequel l'unité de déclenchement d'actualisation comprend :
une sous-unité de contrôle, adaptée pour : juger si les informations de topologie de réseau et/ou informations de source d'horloge actualisées ont ou non un impact sur la relation de suivi d'horloge après avoir reçu les informations de topologie de réseau et/ou informations de source d'horloge actualisées ; et
une sous-unité de déclenchement, adaptée pour redéclencher l'unité de calcul de chemin afin de calculer la SPT et redéclencher l'unité de sélection de source afin de sélectionner les noeuds régis quand un résultat du jugement de la sous-unité de contrôle est positif.

10. Support de mémorisation lisible par ordinateur, comprenant des codes de programme informatiques qui sont exécutées par un noeud d'accès de source d'horloge et qui déclenchent le noeud d'accès de source d'horloge afin d'exécuter les étapes suivantes :
le calcul, par un noeud d'accès de source d'horloge, de l'Arborescence de Chemin la plus Courte, SPT, depuis le noeud d'accès de source d'horloge jusqu'à tous les autres noeuds dans un réseau ;
la sélection, par le noeud d'accès de source d'horloge, de noeuds régis par le noeud d'accès de source d'horloge en fonction de la SPT et d'informations de source correspondant à la SPT ; et
l'établissement de relations de suivi d'horloge depuis le noeud d'accès de source d'horloge jusqu'aux noeuds régis consécutivement le long de la SPT ;
dans lequel l'établissement des relations de suivi d'horloge consécutivement depuis le noeud d'accès de source d'horloge jusqu'aux noeuds régis comprend :
l'envoi, par le noeud d'accès de source d'horloge, d'un message PATH qui porte une ID spécifique d'un bond à l'autre de la SPT jusqu'à ce que le message arrive à un noeud final de branchement parmi les noeuds régis ;
ledit support de mémorisation lisible par ordinateur comprenant en outre des codes de programme informatiques qui sont exécutés par chaque noeud par lequel le message PATH passe et auquel il arrive, et qui déclenchent chaque noeud pour exécuter les étapes suivantes :
le suivi, par chaque noeud, d'une horloge d'une liaison entrante du message PATH selon l'ID spécifique.
